Europäisches Patentamt

European Patent Office

Office européen des brevets

(19)

(11) EP 0 546 907 B1

(12) FASCICULE DE BREVET EUROPEEN

(45) Date de publication et mention
de la délivrance du brevet:
**13.03.1996 Bulletin 1996/11**

(51) Int Cl.⁶: **G01B 7/30**, G01D 5/16

(21) Numéro de dépôt: **92403298.0**

(22) Date de dépôt: **07.12.1992**

(54) **Capteur de position angulaire à piste résistive continue fermée, et procédé de mesure correspondant**

Winkelposition-Sensor mit fortlaufender geschlossener Widerstandsspur und Messverfahren dafür

Angular position sensor with continuous closed resistive track and measuring method therefore

(84) Etats contractants désignés:
**DE FR GB NL**

(30) Priorité: **09.12.1991 FR 9115223**

(43) Date de publication de la demande:
**16.06.1993 Bulletin 1993/24**

(73) Titulaire: **NEOPOST INDUSTRIE**
**F-92220 Bagneux (FR)**

(72) Inventeur: **Vermesse, Bernard**
**F-94240 L'Hay Les Roses (FR)**

(74) Mandataire: **Joly, Jean-Jacques et al**
**Cabinet Beau de Loménie**
**158, rue de l'Université**
**F-75340 Paris Cédex 07 (FR)**

(56) Documents cités:
**EP-A- 0 211 477      EP-A- 0 333 070**
**EP-A- 0 444 796      WO-A-89/08820**
**DE-A- 2 654 238      DE-C- 3 838 291**
**FR-A- 2 199 867      GB-A- 2 082 329**

• PATENT ABSTRACTS OF JAPAN vol. 8, no. 86 (P-269)(1523) 19 Avril 1984 ; & JP-A-59 003 212
• PATENT ABSTRACTS OF JAPAN vol. 6, no. 198 (P-147)(1076) 7 Octobre 1982 ; & JP-A-57 106 802

## Description

Le domaine de l'invention est celui de la mesure d'angles.

Plus précisément, l'invention concerne un capteur permettant de relever la position angulaire d'un curseur pouvant se déplacer et/ou être déplacé suivant une trajectoire circulaire, ou plus généralement ellipsoïdale, voire quelconque fermée.

De tels capteurs trouvent des applications dans tout type de dispositifs et de systèmes dans lesquels il est nécessaire de connaître la position angulaire d'un élément pouvant pivoter autour d'un axe.

On connaît déjà plusieurs types de dispositifs de mesure angulaire, plus ou moins complexes. Il existe ainsi des capteurs sans contact, à base de circuits électromagnétiques inductifs et/ou capacitifs, ou encore de systèmes electro-optiques. Ces différents dispositifs sont généralement très complexes, et ne permettent le plus souvent qu'un nombre fini faible de mesures d'angle distinctes.

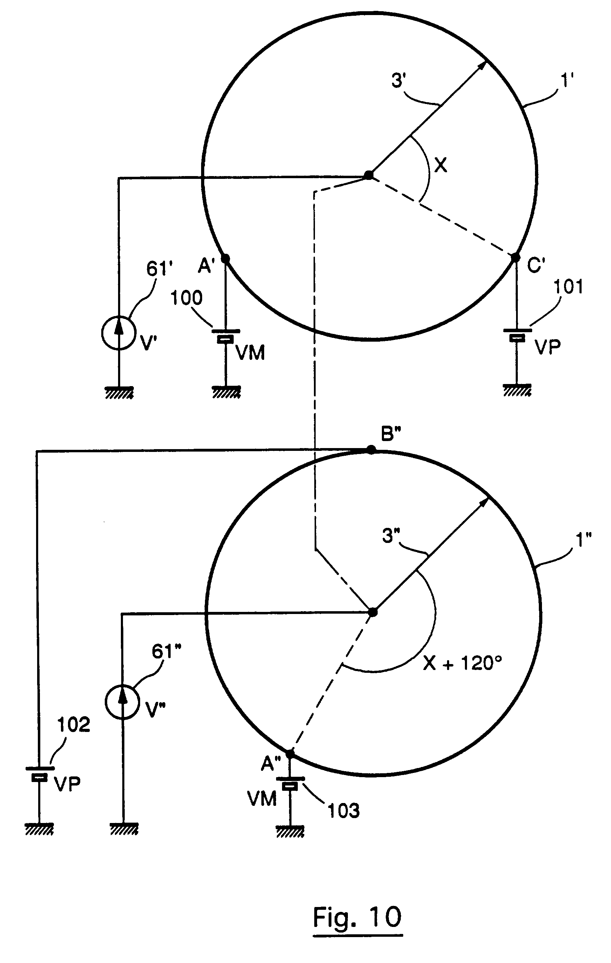

On connait également des capteurs à potentiomètre circulaire, tel que celui représenté en figure 9. Ce dispositif de type connu comprend deux pistes concentriques, l'une (extérieure) résistive, l'autre (intérieure) conductrice. Un curseur mobile en rotation autour du centre des deux pistes établit un court-circuit entre ces pistes à l'aide de deux contacts glissants.

La piste résistive n'est pas continue, mais présente deux extrémités, sur lesquelles on peut appliquer une tension de référence. On comprend que lorsqu'on applique une différence de potentiel de référence entre ces deux extrémités de la piste résistive, la tension recueillie sur la piste conductrice est proportionnelle à la position angulaire du curseur.

Ce type de capteur permet donc d'obtenir, de façon simple, un relevé de position angulaire. Il présente toutefois un certain nombre d'inconvénients, qui en limitent l'utilisation dans de nombreux domaines.

L'inconvénient majeur de ce dispositif est qu'il nécessite une rupture de la piste résistive circulaire afin de permettre un accès à ses extrémités de manière à appliquer la tension de référence. Un angle mort apparaît donc entre ces deux extrémités, dans lequel aucun relevé d'angle n'est possible.

Généralement, des butées mécaniques interdisent au curseur de se positionner à l'intérieur de l'angle mort

Dans ce cas, le déplacement est limité physiquement, ce qui rend impossible l'utilisation du capteur dans tous les cas où le curseur est susceptible de prendre toutes les positions angulaires. De même, ce capteur ne peut pas être mis en oeuvre lorsque le curseur doit pouvoir faire plusieurs tours dans chaque sens de rotation.

Parfois, les butées mécaniques n'existent pas, et le curseur peut traverser l'angle mort. Dans ce second cas, le contact glissant du curseur quitte la piste résistive entre le début et la fin de l'angle mort. Il y a rupture du glissement, ce qui est préjudiciable à la durée de vie du contact.

De plus, tout relevé de position effectué dans cet angle mort donne un résultat plus ou moins aléatoire, non représentatif de la position exacte du curseur.

On connait aussi du document WO-A-89/08820 un capteur de position angulaire comprenant une ou deux pistes continues et fermées et deux curseurs pour mesurer un angle compris entre 0 et 360 degrés. Dans un tel capteur, les curseurs sont couplés mécaniquement ce qui le rend compliqué à réaliser.

L'invention a notamment pour objectif de pallier ces différents inconvénients de l'état de la technique.

Plus précisément, un objectif de l'invention est de fournir un capteur de position angulaire permettant de mesurer tout angle compris entre 0 et 360 degrés sans interruption, le curseur pouvant se déplacer sur au moins un tour complet.

Un objectif particulier de l'invention est également de fournir un tel capteur, dans lesquels le curseur de position peut effectuer sans préjudice plusieurs tours dans un même sens.

L'invention a également pour objectif de fournir un tel capteur limitant l'usure de la piste et des contacts et augmentant la durée de vie du capteur.

Un autre objectif de l'invention est de fournir un tel capteur qui soit simple à réaliser et à mettre en oeuvre industriellement, et peu coûteux.

Un autre objectif de l'invention est encore de fournir un procédé de détermination de la position angulaire relevé par ce capteur qui soit à la fois simple et précis.

Ces objectifs, ainsi que d'autres qui apparaîtront par la suite, sont atteints selon l'invention à l'aide d'un capteur de position angulaire tel que défini par la revendication 1.

Plus particulièrement, le capteur selon l'invention comporte une piste résistive continue et fermée, de sorte qu'il n'y a plus d'angle mort. Le curseur peut donc se déplacer sur un tour complet sans quitter la piste résistive.

Tous les angles peuvent être mesurés, et plusieurs tours sont possible.

Il n'y a plus de rupture de glissement du capteur, ce qui limite donc l'usure de la piste et augmente la durée de vie du capteurs.

De façon avantageuse, la résistance par unité d'angle de la piste résistive est constante. Ainsi, le potentiel mesuré est une fonction linéaire de la position angulaire du curseur.

Avantageusement, les points d'accès électrique à la piste résistive sont équidistants. Ceci permet la simplification du traitement postérieur des mesures, ainsi qu'on le verra par la suite.

Dans un mode de réalisation avantageux de l'invention, une résistance de talon est insérée entre la d'accès et présente donc une discontinuité de la linéarité à ce niveau. Le fait de rajouter une résistance de talon permet de garder une parfaite linéarité de la piste circulaire résistive ;

- la présence de la résistance de talon permet de faciliter le traitement, lorsque sa valeur par rapport à la valeur de la résistance par unité d'angle de la piste circulaire résistive est choisie de façon adéquate.

Dans un mode de réalisation avantageux de l'invention, les moyens de traitement comprennent un convertisseur analogique/numérique et des moyens d'analyse d'au moins deux valeurs fournies par ledit convertisseur, délivrant une donnée représentative de l'angle à mesurer.

Avantageusement, la valeur des résistances de talon est sensiblement égale à 8R/3, où R correspond à la valeur de la résistance par unité d'angle de la piste résistive.

L'invention concerne également un procédé de mesure de la position angulaire du curseur d'un capteur consistant à effectuer deux mesures successives correspondant à deux configurations distinctes d'alimentation, et à traiter ces deux mesures pour déterminer la valeur de l'angle.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un schéma simplifié du capteur angulaire selon l'invention ;

- la figure 2 présente le schéma électrique équivalent du capteur de la figure 1 lorsque l'angle à mesurer est compris entre 0 et 120 degrés ;

- les figures 3a et 3b présentent le schéma électrique équivalent du capteur dans une première configuration d'alimentation, avec l'angle à mesurer respectivement inférieur et supérieur à 120 degrés;

- la figure 4 présente la courbe de variation de la tension représentative de la position du curseur en fonction de l'angle à mesurer dans la première configuration d'alimentation des figures 3a et 3b ;

- la figure 5 présente la superposition des deux courbes de variation de la tension en fonction de l'angle à mesurer correspondant aux deux configurations d'alimentation ;

- la figure 6 présente le schéma complet simplifié d'un capteur selon l'invention, comprenant notamment des moyens de commande des moyens d'application de potentiels, et des moyens de traitement des mesures ;

- les figures 7a et 7b présentent le schéma équivalent du capteur dans une première configuration d'alimentation avec l'angle à mesurer égal respectivement à 120 degrés et 0 degré ;

- la figure 8 présente un organigramme du procédé de détermination de la position angulaire du capteur et de vérification du bon fonctionnement de ce capteur ;

- la figure 9 présente un schéma simplifié d'un capteur angulaire selon l'état de la technique antérieure ;

- la figure 10 présente une combinaison de deux schémas à juxtaposer pour illustrer une variante à double curseur.

Ainsi qu'on l'a précisé en préambule, les capteurs angulaires de type connu, tels que celui représenté en figure 9, présentent une discontinuité D de la piste P résistive qui pose de nombreux problèmes.

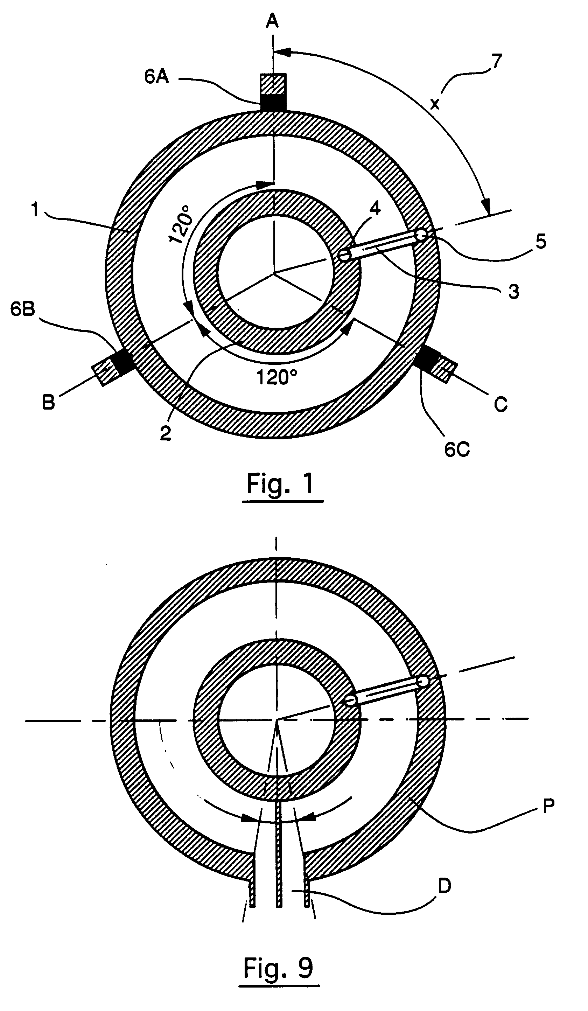

Le capteur de l'invention apporte une solution à ces problèmes. En effet, ce capteur, tel qu'illustré par la figure 1, présente une piste résistive 1 continue fermée, ce qui permet au curseur 3 de prendre toutes les positions possibles.

Il convient de noter que cette solution n'est nullement évidente. Le fait de "fermer" la piste résistive empêche la mesure directe classique, basée sur l'application d'une tension de référence sur les deux extrémités de cette piste.

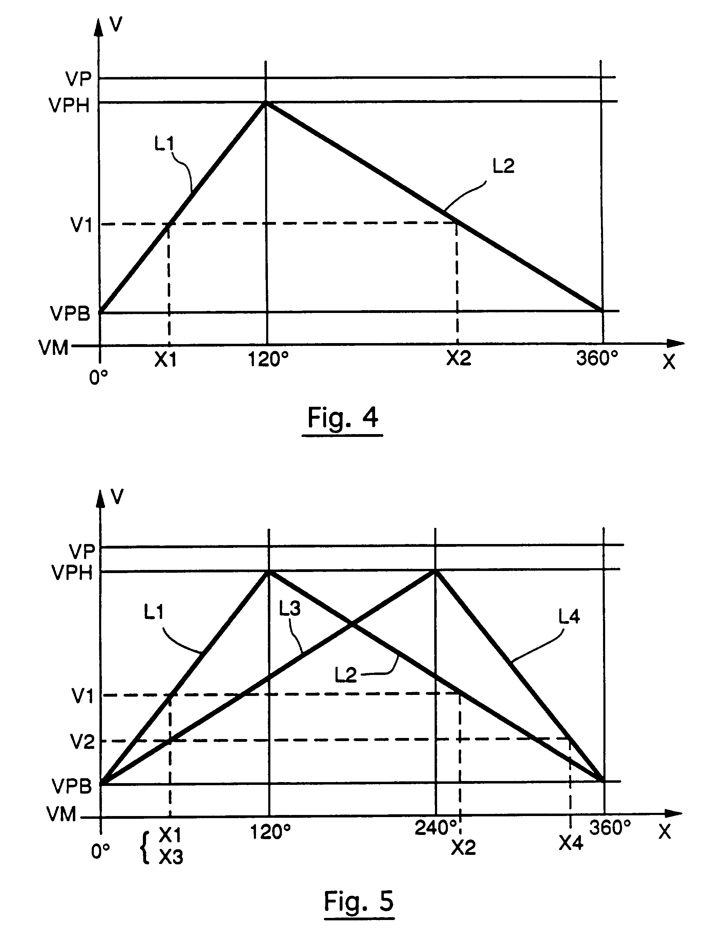

Ainsi que cela apparaîtra plus loin, en liaison avec la figure 4, l'application d'une tension de référence entre deux points quelconques de la piste résistive fermée ne permet en effet qu'un relevé pouvant correspondre à deux positions du curseur.

L'invention ne consiste donc pas simplement dans le fait de fermer la piste résistive, mais également dans différents moyens permettant de relever de façon sûre et exacte la position du curseur sur une telle piste.

La figure 1 présente donc un capteur de position angulaire selon l'invention.

Il est du type à potentiomètre, et est constitué de deux pistes concentriques, l'une résistive 1, l'autre conductrice 2 . Un curseur 3 mobile autour du centre des deux pistes établit un court-circuit entre ces deux pistes à l'aide de deux contacts glissants 4 et 5, par exemple du type des contacts à balai.

Ce mode de réalisation est bien sûr donné à titre d'exemple de réalisation. De nombreuses autres solutions peuvent être également envisagées. Par exemple, la piste conductrice peut être d'un rayon supérieur à celui de la piste résistive. Elle peut aussi être réduit à un seul point, correspondant au centre de la piste résistive.

Le curseur peut également se déplacer sur la piste résistive sans être physiquement relié à l'axe de rotation, le contact étant alors assuré à l'aide d'un fil électrique volant ou de tout autre moyen adéquat.

De même, on peut prévoir que l'une des pistes, ou les deux, ne soit pas circulaire, mais ellipsoïdale, ou plus généralement de forme quelconque fermée. Dans ce cas, le curseur présentera avantageusement un contact pouvant se déplacer en translation pour suivre la ou les pistes. Une solution est également de faire en sorte que les deux pistes restent toujours à égale distance l'une de l'autre.

Dans le même de réalisation de la figure 1, le capteur comprend trois points d'accès électrique A, B et C, pour l'application de tensions de référence, répartis sur la piste résistive 1, et la piste conductrice 2 constitue un point d'accès au curseur 3, pour le relevé des mesures.

Les trois points A, B, C sont équidistants. Cette condition n'est nullement obligatoire, mais permet de simplifier les calculs de détermination de l'angle, notamment dans le procédé précisé par la suite.

Avantageusement, une résistance de talon 6A à 6C est insérée entre chacun des points A, B, C et la piste résistive 1. Cela permet de conserver la linéarité de la piste résistive, et, si la valeur de cette résistance est bien choisie, de simplifier encore les calculs.

La résistance par unité d'angle de la piste résistive 1 est constante. Cette solution apparaît particulièrement simple, tant au point de vue de la réalisation technique du capteur que de celui des calculs à effectuer.

Il est toutefois envisageable de réaliser une piste à résistance variable par unité d'angle, ou constante par morceaux (par exemple différente entre chaque point d'accès).

On note par la suite R1 la valeur de chacune des trois résistances de talon et R la valeur de la résistance par unité d'angle de la piste résistive.

Le capteur permet de relever la position angulaire du curseur 3. Dans l'exemple donné, on veut donc déterminer la valeur X (par exemple en degrés) de l'angle 7 entre le curseur 3 et le point A, choisi arbitrairement comme référence.

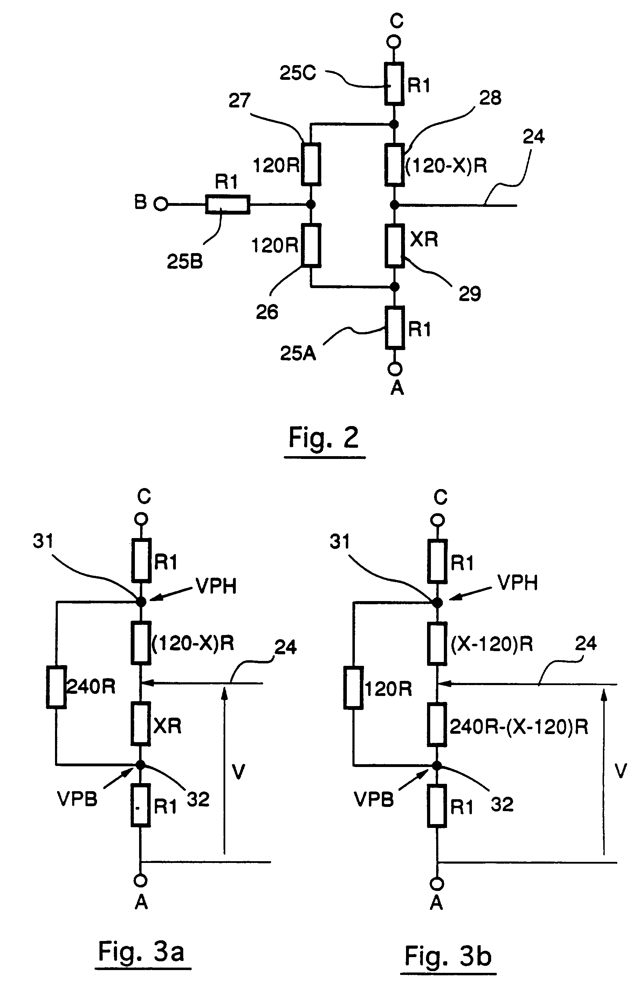

La figure 2 présente le schéma électrique équivalent du capteur si l'angle X est inférieur à 120 degrés. On retrouve les trois points A, B, C, le curseur 24 et les trois résistances de talon R1, 25A à 25C.

La répartition de la résistance de la piste résistive est décomposée en :

- deux résistances 120 R (26 et 27) ;
- une résistance X.R (29) ;
- une résistance (120 - X)R (28);

soient 360 R au total qui correspondent bien à un tour complet.

Pour déterminer la position exacte du curseur, deux mesures successives correspondant à deux configurations distinctes d'alimentation sont nécessaires.

Dans une première configuration, on porte le point A à un potentiel VM, le point C à un potentiel VP et on ne connecte pas le point B.

La figure 3a présente le schéma électrique équivalent du capteur si X est inférieur à 120 degrés et avec cette première configuration d'alimentation.

Soient VPH et VPB respectivement les potentiels aux points 31 et 32.

La tension V du curseur, différence entre le potentiel du curseur 24 et le potentiel du point A, est alors donnée par la relation :

$$V = (VPH - VPB) X/120 + VPB \qquad (a)$$

La figure 3b présente le schéma équivalent du capteur si X est supérieur à 120 degrés et toujours avec la première configuration d'alimentation.

La tension V du curseur est donnée par la relation:

$$V = (VPH - VPB)\frac{[240-(X-120)]R}{[240-(X-120)]R+(X-120)R}+VPB$$

soit:

$$V = (VPH - VPB)\frac{360 - X}{240}+VPB$$

Donc:

$$V = 1/2 \, (3\,VPH - VPB) - (VPH - VPB) X/240 \qquad (b)$$

Dans les deux cas, relations (a) et (b), la tension V relevée est donc une fonction linéaire de l'angle X.

De plus cette tension V est indépendante de la valeur de R.

La figure 4 présente une courbe de variation de la tension V en fonction de l'angle X.

Lorsque X varie entre 0 et 360 degrés (un tour), V varie entre VPB et VPH. La courbe est composée de deux morceaux de droite L1 et L2 correspondant respectivement aux relations (a) et (b).

A la suite de la première mesure, on connaît une tension V1 sur le curseur à un instant donné. Il existe alors deux positions possibles X1 et X2 du curseur qui vérifient respectivement les équations (a) et (b), d'où :

$$X1 = \frac{(V1 - VPB)120}{VPH - VPB}$$

$$X2 = \frac{(3\,VPH - VPB - 2\,V1)120}{VPH - VPB}$$

L'une de ces positions correspond à la position réelle du curseur, l'autre à une position fictive. Dans le cas où il n'est pas nécessaire de connaître l'angle exact, mais par exemple simplement un déphasage par rapport à une référence (+X ou -X) une seule mesure telle que décrit ci-dessus suffit, si les deux points d'accès sont répartis symétriquement sur la piste résistive (il n'y a pas alors de troisième point d'accès).

Dans les autres cas, pour trouver la position réelle du curseur, on procède à une seconde mesure, avec une seconde configuration d'alimentation. On commute le point d'application du potentiel VP du point C au point B. Ainsi on applique le potentiel VM au point A, le potentiel VP au point B et le point C n'est pas connecté.

Entre les deux mesures, le curseur est bien sûr resté à la même position.

En suivant le même raisonnement que précédemment, on obtient deux nouvelles relations correspondant respectivement aux deux cas X inférieur et X supérieur à 240 degrés :

$$V = (VPH - VPB) X/240 + VPB \qquad (c)$$
$$V = (3\,VPH - 2.VPB) - (VPH - VPB) X/120 \qquad (d)$$

La figure 5 présente la superposition des deux courbes correspondant aux deux configurations d'alimentation.

On retrouve L1 et L2 formant la première courbe. La deuxième courbe est composée, de façon similaire, de deux morceaux de droite L3 et L4 correspondant respectivement aux relations (c) et (d).

A la suite de la deuxième mesure, on recueille une tension V2 sur le curseur correspondant aux deux positions X3 et X4 déduites respectivement des relations (c) et (d):

$$X3=\frac{(V2-VPB)240}{VPM-VPB}$$

$$X4=\frac{(3\,VPH-2\,VPB-V2)120}{VPM-VPB}$$

Dans l'exemple de la figure 5, on constate que X1 = X3. C'est donc que X1 est la position réelle du curseur lors des deux mesures, X2 et X4 étant des positions fictives.

On peut donc écrire l'égalité : X1 = X3 soit :

$$\frac{(V1-VPB)120}{VPH-VPB}=\frac{(V2-VPB)240}{VPH-VPB}$$

$$V1 - VPB = 2V2 - 2\,VPB$$

D'où:

$$V1 = 2\,V2 - VPB \qquad (e)$$

Donc, si à la suite d'une première mesure de tension réalisée en appliquant VP en C dont le résultat est V1, suivi d'une seconde mesure réalisée après commutation de VP du point C au point B ayant pour résultat V2 et si entre ces deux mesures il existe la relation (e), alors le curseur est positionné en X1, sinon le curseur est positionné en X2.

On connaît donc à partir de ce moment la position exacte du curseur, et le calcul peut être interrompu. Toutefois, dans le cas d'un mauvais fonctionnement du capteur, par exemple si le curseur ne fait pas contact sur une des pistes (par exemple V1 = V2), alors l'application de la règle précédente utilisant la relation (e) fournit systématiquement X2 comme position du curseur, ce qui est faux.

Pour remédier à cet inconvénient, donc pour vérifier le bon fonctionnement du capteur, il suffit de procéder de la façon suivante :

* si le curseur est dans une position comprise entre 0 et 120 degrés, alors entre V1 et V2 existe l'égalité (e) et la position réelle du curseur est X1 (X1 = X3).
* si le curseur est dans une position comprise entre 120 et 240 degrés, alors V1 est donné par l'équation de la droite L2, soit (b) et V2 par l'équation de la droite L3, soit (c). Dans ce cas, X2 = X3 et :
$$V1 = 1/2\ (3VPH + VPB) - V2 \qquad (f)$$
* si le curseur est dans une position comprise entre 240 et 360 degrés, alors V1 est donné par l'équation de la droite L2, soit (b) et V2 par l'équation de la droite L4 soit (d). Dans ce cas, X2 = X4 et :
$$2V1 = V2 + VPB \qquad (g)$$
* enfin si aucune des égalités (e), (f) ou (g) n'est vérifiée, alors le fonctionnement du capteur est défectueux.

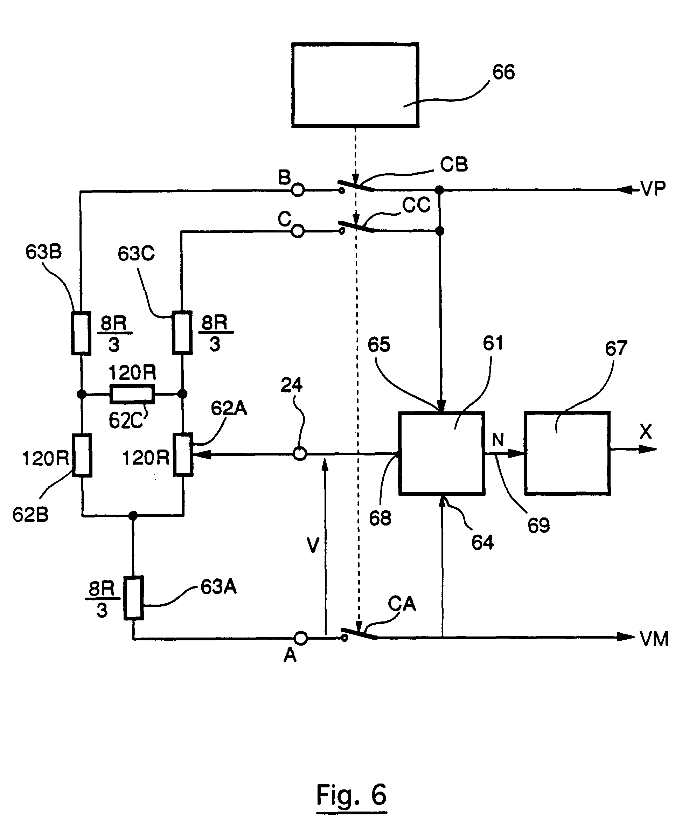

La figure 6 présente le schéma simplifié d'un capteur comprenant des moyens de commande sélective des moyens d'application de potentiels, et des moyens de traitement des mesures.

L'alimentation sélective des points d'accès A, B, C est assuré par des contacts CA, CB, CC commandés par des moyens de commande sélective 66, agissant par exemple en fonction d'ordres reçus d'un microprocesseur assurant le pilotage global du capteur.

La mesure de tension issue du curseur 24 est dirigée vers les moyens de traitement des mesures, comprenant ici un convertisseur analogique/numérique 61 et une unité de traitement 67, délivrant après calcul la valeur X de l'angle mesuré. Cette unité de traitement 67 peut par exemple être implantée dans le microprocesseur sus-mentionné.

La piste résistive est représentée par les trois résistances 62A à 62C de 120 R bouclées, où R est la résistance de la piste résistive circulaire pour un angle de 1 degré.

Les trois résistances R1, 63A à 63C, ont pour valeur 8R/3. Ce choix, ainsi qu'on le verra par la suite, permet de fortement simplifier les calculs, dans le cas d'une numérisation sur 8 bits de la valeur de l'angle.

Le point d'accès électrique A est relié au point VM de l'alimentation à travers le contact CA et les points d'accès électrique B et C peuvent être reliés ou non au point VP de l'alimentation grâce aux contacts CB et CC.

Le curseur 24 est relié à l'entrée analogique 68 d'un convertisseur analogique/numérique 61 de n bits qui fournit à sa sortie 69 un nombre binaire N proportionnel à la tension d'entrée V.

Les bornes d'alimentation du convertisseur, $V_{ref+}$ 65 et $V_{ref-}$ 64 sont reliées respectivement aux points VP et VM de l'alimentation.

La tension V du curseur est la différence entre le potentiel du curseur 24 et le potentiel du point d'accès A.

Dans ces conditions :

$$N=\frac{2^n}{VP-VM}\ V \qquad (h)$$

Dans la suite de l'exposé, on s'intéressera au cas de la conversion sur 8 bits, soit n = 8 bits. La généralisation est aisée.

La relation (h) s'écrit donc :

$$N=\frac{256}{VP-VM}V$$

soit:

$$V=\frac{VP-VM}{256}N \qquad (i)$$

L'impédance de l'entrée analogique du convertisseur 61 étant grande par rapport à l'impédance du capteur, le courant circulant dans les contacts du curseur est négligeable.

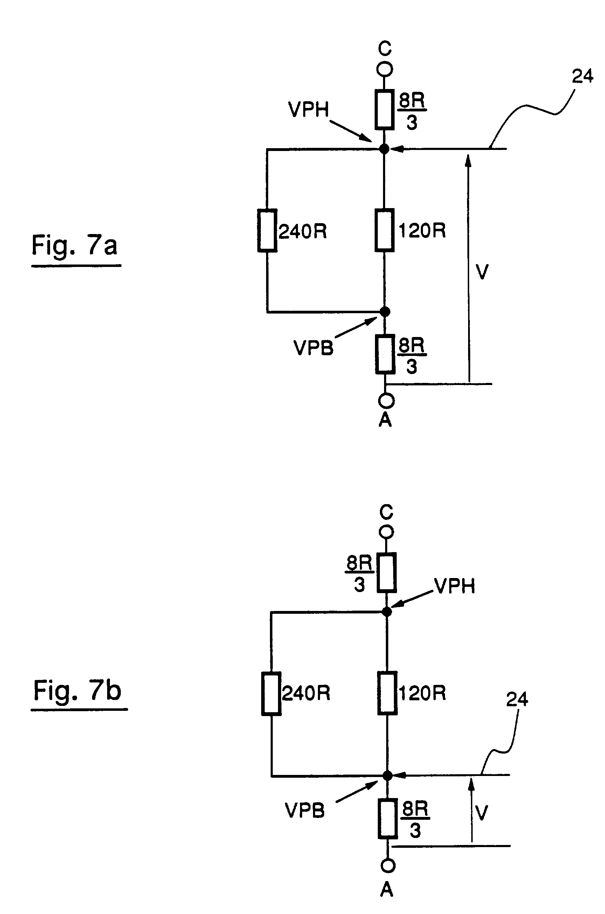

La figure 7a présente le schéma équivalent du capteur si les contacts CA et CC sont fermés, le contact CB est ouvert, et la position angulaire du curseur est X = 120 degrés.

Les résistances 240 R et 120 R en parallèle sont alors équivalentes à une seule résistance 80 R.

Dans ce cas, le potentiel VPH est donné par la relation :

$$VPH = (VP - VM) \frac{80R + \frac{8R}{3}}{80R + \frac{16R}{3}}$$

$$VPH = (VP - VM) \frac{248}{256} \qquad (j)$$

A cette valeur de VHP correspond en sortie du convertisseur un nombre NPH tel que, d'après (i) :

$$NPH = \frac{256}{VP - VM} VPH$$

soit:

$$NPH = \frac{256}{VP - VM} \times (VP - VM) \frac{248}{256}$$

Donc : NPH = 248

La figure 7b correspond à la même configuration d'alimentation lorsque la position angulaire du curseur est X = 0 degré.

Le potentiel VPB est donné par la relation:

$$VPB = (VP - VM) \frac{\frac{8R}{3}}{80R + \frac{16R}{3}}$$

$$VPB = (VP - VM) \, 8/256 \qquad (k)$$

or: VPB = (VP - VM) NPB/256
donc:      NPB = 8

Ainsi pour X variant de 0 à 120 degrés, N varie de 8 à 248. Si X varie de 1 degré, N varie de 2. Si, pour chaque degré parcouru par le curseur, on souhaite une variation de 1 pour N, un calcul simple montre qu'il faut choisir R1 = 136/3R.

En reprenant les relations (a), (b), (c), (d) et en remplaçant VPH et VPB à l'aide des relations (j) et (k), et enfin en comparant à la relation (i), on obtient quatre relations simples entre X et N.

Par exemple, pour (a) :

$$V = (VPH - VPB) \frac{X}{120} + VPB$$

$$V = [(\frac{VP - VM}{256} \times 248) - (\frac{VP - VM}{256} \times 8)] \frac{X}{120} + \frac{VP - VM}{256} \times 8$$

$$V = \frac{VP - VM}{256} (2X + 8)$$

or, d'après (i):

$$V = \frac{VP - VM}{256} \times N$$

donc : N = 2X + 8
soit:

$$X = \frac{N}{2} - 4$$

On a bien X = 0 si N = 8, et X = 120 si N = 248. Le même traitement appliqué aux équations (b), (c) et (d) donne respectivement:

$$X = 368 - N \qquad (m)$$
$$X = N - 8 \qquad (n)$$
$$X = 364 - N/2 \qquad (p)$$

A la suite de la première mesure effectuée avec les contacts CA, CC fermés et le contact CB ouvert, on obtient deux positions possibles X1 et X2 en fonction de N1:

$$X1 = N1/2 - 4$$

et

$$X2 = 368 - N1$$

A la suite de la seconde mesure effectuée avec les contacts CC ouvert et CA, CB fermés, on obtient deux nouvelles positions possibles X3 et X4 en fonction de N2:

$$X3 = N2 - 8$$

et

$$X4 = 364 - N2/2$$

Si on reprend les quatre cas possibles, on a :

- si le curseur se trouve entre 0 et 120 degrés, alors X1 = X3, donc:

$$N1/2 - 4 = N2 - 8$$

soit :

$$N1 = 2N2 + 4 \qquad (q)$$

si (q) est vérifiée, alors X = N2 - 8

- si le curseur se trouve entre 120 et 240 degrés, alors X2 = X3, donc:

$$368 - N1 = N2 - 8$$

soit :

$$N1 + N2 = 360 \qquad (r)$$

si (r) est vérifiée, alors X = N2 - 8

- si le curseur se trouve entre 240 et 360 degrés, alors X2 = X4, donc:

$$368 - N1 = 364 - N2/2$$

soit :

$$N1 = N2/2 + 4 \qquad (s)$$

si (s) est vérifiée, alors X = 368 - N1

- si aucune des trois égalités précédentes (q), (r), (s) n'est vérifiée, alors le capteur est en défaut.

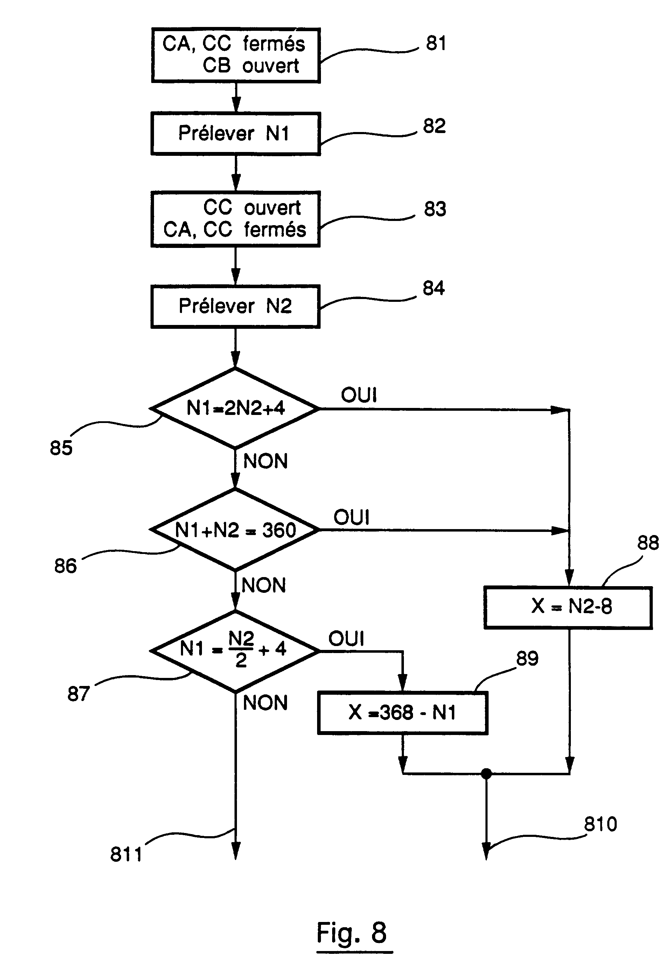

La figure 8 présente un organigramme résumant la façon d'obtenir la position angulaire X du capteur tout en vérifiant le bon fonctionnement de ce capteur, selon la démarche décrite ci-dessus.

Une première étape 81 correspond à la première configuration d'alimentation : CA et CC sont fermés, CB est ouvert.

Dans cette configuration, on prélève dans une seconde étape 82 une première valeur N1 en sortie du convertisseur, que l'on mémorise.

Une troisième étape 83 correspond à la seconde configuration d'alimentation : CA et CB sont fermés, CC est ouvert.

Dans cette configuration, on prélève dans une quatrième étape 84 une seconde valeur N2 en sortie du convertisseur 61, que l'on conserve également.

Dans une étape suivante 85, on regarde si ces deux nombres N1 et N2 vérifient la relation N1 = 2.N2 + 4. Si c'est le cas, dans une dernière étape 88, on calcule la position angulaire X du capteur à l'aide de la relation X = N2 - 8.

Dans le cas contraire, dans une nouvelle étape 86 on teste la validité d'une seconde relation entre N1 et N2 : N1 + N2 = 360. Si celle-ci est validée, on calcule la position angulaire X (= N2 - 8), dans la même étape 88 que précédemment, sinon on teste, dans une nouvelle étape 87, une troisième relation prédéterminée entre N1 et N2 : N1 = N2/2 + 4.

Si cette troisième relation est vérifiée, dans une dernière étape 89 on calcule la position angulaire X à l'aide d'une relation prédéterminée (X = 368 - N1), sinon on conclut 811 que le capteur est en défaut.

Ainsi lorsque l'un des trois tests est positif, on sait calculer X et on est sûr de la justesse du résultat trouvé 810.

Par contre, si les trois tests sont négatifs, on ne peut pas calculer X et on est sûr que le capteur est en défaut 811.

Cet exemple d'organigramme est bien sûr donné à titre indicatif. Il présente l'avantage de ne nécessiter que des calculs simples, aisés à mettre en oeuvre dans un microprocesseur. Notamment, il ne nécessite pas de multiplication, mais seulement des additions et des décalages binaires.

Toutefois, de nombreuses autres méthodes de calcul peuvent être envisagées.

Plus généralement, le capteur de l'invention peut être réalisé dans bien d'autres configurations. Ainsi, par exemple, on peut prévoir plus de trois points d'accès à la piste résistive. Des points d'alimentation (ici sur la piste) et de mesure (ici sur le curseur) peuvent être intervertis, etc...

On peut également utiliser un curseur double (3',3") conformément à la figure 10.

Chaque curseur 3',3" possède alors sa propre piste conductrice. Dans ce cas, deux points d'accès A',C',A",B" à la piste résistive 1',1" sont suffisants pour appliquer la tension de référence. A un instant donné, la mesure simultanée de la tension V',V" disponible sur chaque curseur permet de déduire la position absolue de l'un des curseurs.

**Revendications**

1. Capteur de position angulaire, du type comportant :

   - une piste résistive (1) continue et fermée ayant au moins trois points d'accès électriques (A, B, C), et au moins un curseur (3) susceptible de se déplacer en assurant un contact électrique avec la piste;
   - des moyens (CA,CB,CC,66) pour appliquer des potentiels électriques distincts et prédéterminés (VP,VM) en au moins deux de ces points d'accès (A,B,C,4);
   - des moyens (61, 67) de mesure pour mesurer séparément un premier et un second potentiel électrique et de traitement pour déduire une valeur d'angle;

   caractérisé en ce que lesdits moyens d'application de potentiel assurent:

   - pendant une première période, le maintien du potentiel VM sur un point d'accès A, du potentiel VP sur un point d'accès C, un point d'accès B n'étant pas alimenté; et
   - pendant une seconde période, le maintien du potentiel VM sur le point d'accès A, du potentiel VP sur le point d'accès B, le point d'accès C n'étant pas alimenté;

   en ce que lesdits moyens de mesure et de traitement (61,67) effectuent une première mesure pendant la première période et convertissent la valeur mesurée en un nombre binaire N1, effectuent une seconde mesure pendant la seconde période et convertissent de nouveau la valeur mesurée en un nombre binaire N2, déterminent le secteur angulaire dans lequel se trouve le curseur (3), un secteur angulaire étant compris entre deux points d'accès électrique (A,B,C) à la piste résistive (1) et enfin, déterminent la position angulaire (X) dudit curseur à partir des potentiels mesurés (N1,N2).

2. Capteur selon la revendication 1, caractérisé en ce que la piste résistive (1) continue présente une résistance par unité d'angle (R) constante.

3. Capteur selon l'une quelconque des revendications 1 et 2, caractérisé en ce que lesdits points d'accès (A,B,C) à la piste (1) continue sont équidistants.

4. Capteur selon l'une quelconque des revendications 1 à 3, caractérisé en ce qu'une résistance de talon (6A à 6C,R1) est insérée entre chacun desdits points d'accès (A,B,C) à cette piste résistive (1) et lesdits moyens d'application de potentiel électrique (CA,CB,CC,66).

5. Capteur selon la revendication 1, caractérisé en ce que les moyens de mesure et de traitement comprennent :

   - un convertisseur analogique/numérique (61) dont l'entrée analogique est reliée audit curseur,
   - des moyens (67) d'analyse d'au moins deux valeurs fournies par ledit convertisseur (61), délivrant une donnée proportionnelle à la position angulaire (X) du curseur (3).

6. Capteur selon la revendication 4, caractérisé en ce que lesdites résistances de talon (6A à 6C; R1) ont une valeur sensiblement égale à 8R/3 où R correspond à la valeur de la résistance par unité d'angle de ladite piste résistive (1).

7. Procédé de mise en oeuvre de la mesure de la position angulaire du curseur d'un capteur conforme à la revendication 5, caractérisé en ce qu'il comprend les étapes suivantes :

- alimentation (81) dans une première configuration dans laquelle lesdits moyens d'application de tensions assurent le maintien du potentiel VM sur un point d'accès A, du potentiel VP sur un point d'accès C, un point d'accès B n'étant pas alimenté,
- une première mesure (82) du potentiel présent sur le point d'accès (4; 24) audit curseur (3), la valeur de cette première mesure étant transformée en un nombre binaire N1 par ledit convertisseur analogique/numérique (61),
- alimentation (83) dans une seconde configuration dans laquelle lesdits moyens d'application de tensions assurent le maitien du potentiel VM sur le point d'accès A, du potentiel VP sur le point d'accès B, le point d'accès C n'étant pas alimenté,
- une seconde mesure (84) du potentiel sur le point d'accès (4; 24) audit curseur (3), la valeur de cette seconde mesure étant transformée en un nombre binaire N2 par le convertisseur analogique/numérique (61),
- détermination (85, 86, 87) du secteur angulaire dans lequel se trouve le curseur (3), un secteur angulaire étant compris entre deux points d'accès électrique (A, B, C) à la piste résistive (1),
- détermination (88, 89) d'une donnée proportionnelle à ladite position angulaire (X) dudit curseur (3).

8. Procédé selon la revendication 7, caractérisé en ce que :

- ladite étape de détermination dudit secteur angulaire consiste en une série de tests (85, 86, 87) successifs de validité de trois relations prédéterminées entre N1 et N2,
- ladite étape de détermination de ladite donnée (810) proportionnelle à ladite position angulaire consiste en un calcul à l'aide de formules prédéterminées dès que l'une desdites trois relations prédéterminées entre N1 et N2 est validée.

9. Procédé selon la revendication 8, caractérisé en ce qu'il comprend également une étape de détection (811) du mauvais fonctionnement du capteur lorsqu'aucune desdites trois relations (85, 86, 87) n'est validée.

10. Procédé selon l'une quelconque des revendications 8 et 9 du type appliqué à un capteur selon la revendication 6 coopérant avec un convertisseur analogique/numérique travaillant sur n=8 bits, caractérisé en ce que :

- le premier test (85) de détermination du secteur angulaire consiste à vérifier la relation :
$$N1 = 2N2 + 4,$$
- le deuxième test (86) consiste à vérifier la relation :
$$N1 + N2 = 360,$$
- si l'un de ces tests (85, 86) est vérifié, la valeur exacte de la position angulaire en degrés est donnée (88) par la formule :
$$X = N2 - 8,$$
- le troisième test (87) de détermination du secteur angulaire consiste à vérifier la relation :
$$N1 = N2/2 + 4,$$
- si ce troisième test est vérifié, la valeur exacte de la position angulaire en degrés est donnée par la formule :
$$X = 368 - N1.$$

**Patentansprüche**

1. Winkelmeßsonde, die aufweist:

- eine kontinuierliche und in sich geschlossene Widerstandsbahn (1) mit mindestens drei elektrischen Zugangspunkten (A, B, C) und mindestens einem Läufer (3), der verschiebbar ist und einen elektrischen Kontakt mit der Bahn gewährleistet,
- Mittel (CA, CB, CC, 66), um unterschiedliche und bestimmte elektrische Potentiale (VP, VM) an mindestens zwei dieser Zugangspunkte (A, B, C) anzulegen,
- Mittel (61, 67) zur getrennten Messung eines ersten und eines zweiten elektrischen Potentials und zur Verarbeitung dieser Meßwerte, um daraus einen Winkelwert abzuleiten, dadurch gekennzeichnet, daß die Mittel zum Anlegen eines Potentials während einer ersten Periode das Potential VM an einen Zugangspunkt A und das Potential VP an einen Zugangspunkt C anlegen, während ein Zugangspunkt B nicht gespeist wird, und während einer zweiten Periode das Potential VM an den Zugangspunkt A und das Potential VP an den Zugangspunkt B anlegen, während der Zugangspunkt C nicht gespeist wird, und daß die Mittel zur Messung und zur Verarbeitung (61, 67) eine erste Messung während der ersten Periode durchführen und den Meßwert in eine Binärzahl N1 umwandeln, und dann während der zweiten Periode einen zweiten Meßwert ermitteln und wieder in einen Binärwert N2 umwandeln, worauf sie den Winkelsektor bestimmen, in dem sich der Läufer (3) befindet, wobei ein Winkelsektor zwischen zwei elektrischen Zugangspunkten (A, B, C) zur Widerstandsbahn (1) liegt, und daß schließlich die Verarbeitungsmittel die Winkelstellung (X) des Läufers ausgehend von den gemessenen Potentialen (N1, N2) bestimmen.

2. Sonde nach Anspruch 1, dadurch gekennzeichnet, daß die kontinuierliche Widerstandsbahn (1) einen konstanten Widerstand (R) je Winkeleinheit aufweist.

3. Sonde nach einem beliebigen der Ansprüche 1 und 2, dadurch gekennzeichnet, daß die Zugangspunkte (A, B, C) zur kontinuierlichen Bahn (1) gleiche Abstände besitzen.

4. Sonde nach einem beliebigen der Ansprüche 1 bis 3, dadurch gekennzeichnet, daß ein Vorwiderstand (6A bis 6C, R1) zwischen jeden der Zugangspunkte (A, B, C) zur Widerstandsbahn (1) und die Mittel zum Anlegen elektrischer Potentiale (CA, CB, CC, 66) eingefügt ist.

5. Sonde nach Anspruch 1, dadurch gekennzeichnet, daß die Mittel zur Messung und Verarbeitung aufweisen:

- einen Analog-Digital-Wandler (61), dessen Analogeingang an den Läufer angeschlossen ist,
- Mittel (67) zur Analyse mindestens zweier vom Wandler (61) gelieferter Werte, die eine Angabe proportional zur Winkelstellung (X) des Läufers (3) liefern.

6. Sonde nach Anspruch 4, dadurch gekennzeichnet, daß die Vorwiderstände (6A bis 6C; R1) einen Wert von im wesentlichen 8R/3 besitzen, wobei R der Wert des Widerstands der Widerstandsbahn (1) je Winkeleinheit ist.

7. Verfahren zur Durchführung der Winkelmessung des Läufers einer Sonde gemäß Anspruch 5, dadurch gekennzeichnet, daß es folgende Schritte enthält:

- eine Speisung (81) in einer ersten Konfiguration, in der die Mittel zum Anlegen von Spannungen das Potential VM an einen Zugangspunkt A, das Potential VP an einen Zugangspunkt C und gar kein Potential an einen Zugangspunkt B anlegen,
- eine erste Messung (82) des am Zugangspunkt (4; 24) des Läufers (3) vorliegenden Potentials, wobei dieser erste Meßwert vom Analog-Digital-Wandler (61) in eine Binärzahl N1 umgewandelt wird,
- die Speisung (83) in einer zweiten Konfiguration, in der die Mittel zum Anlegen von Spannungen das Potential VM an den Zugangspunkt A, das Potential VP an den zugangspunkt B und gar kein Potential an den Zugangspunkt C anlegen,
- eine zweite Messung (84) des Potentials am Zugangspunkt (4; 24) zum Läufer (3), wobei dieser zweite Meßwert vom Analog-Digital-Wandler (61) in eine Binärzahl N2 umgewandelt wird,
- die Bestimmung (85, 86, 87) des Winkelsektors, in dem sich der Läufer (3) befindet, wobei ein Winkelsektor zwischen zwei elektrischen Zugangspunkten (A, B, C) zur Widerstandsbahn (1) definiert ist,
- die Bestimmung (88, 89) einer Größe proportional zur Winkelstellung (X) des Läufers (3).

8. Verfahren nach Anspruch 7, dadurch gekennzeichnet,

- daß der Schritt der Bestimmung des Winkelsektors in einer Reihe von aufeinanderfolgenden Tests (85, 86, 87) besteht, bei denen die Gültigkeit von drei vorbestimmten Beziehungen zwischen N1 und N2 überprüft wird,
- daß der Schritt der Bestimmung einer zur Winkelstellung proportionalen Größe (810) in einer Berechnung mit Hilfe von vorbestimmten Formeln besteht, sobald eine der drei vorbestimmten Beziehungen zwischen N1 und N2 als gültig erkannt wurde.

9. Verfahren nach Anspruch 8, dadurch gekennzeichnet, daß weiter ein Schritt der Erfassung (811) eines Betriebsfehlers der Sonde vorgesehen ist, wenn keine der drei Beziehungen (85, 86, 87) als gültig erkannt wird.

10. Verfahren nach einem beliebigen der Ansprüche 8 und 9 in Anwendung auf eine Sonde nach Anspruch 6, die mit einem Analog-Digital-Wandler zusammenwirkt, der n = 8 Bits verwendet, dadurch gekennzeichnet,

- daß der erste Test (85) zur Bestimmung des Winkelsektors darin besteht, die folgende Beziehung zu überprüfen:
$$N1 = 2N2 + 4$$
- daß der zweite Test (86) darin besteht, die folgende Beziehung zu überprüfen:
$$N1 + N2 = 360,$$
wobei der genaue Wert der Winkelstellung in Grad durch die Formel $X = N2 - 8$ gegeben ist (88), wenn einer dieser Tests (85, 86) erfolgreich war,
- und daß der dritte Test (87) zur Bestimmung des Winkelsektors darin besteht, die Beziehung N1 = N2/2 + 4 zu überprüfen und daß der exakte Wert der Winkelstellung in Grad durch die Formel X = 368 - N1 gegeben ist, wenn dieser dritte Test erfolgreich war.

## Claims

1. Angular position sensor of the type comprising:

   - one closed continuous resistive track (1) having at least three electric access points (A, B, C) and at least one cursor (3) adapted to move in electrical contact with the track;
   - means (CA, CB, CC, 66) for applying separate predetermined electrical potentials (VP, VM) to at least two access points (A, B, C, 4);
   - means (61, 67) for measuring separately a first and a second electric and processing potential in order to deduce an angle value;

   characterized in that said potential application means apply:

   - during a first period, applying the potential VM to an access point A, the potential VP to an access point C, an access point B not being energized; and
   - during a second period, applying the potential VM to an access point A, the potential VP to an access point B, an access point C not being energized;

   in that said measuring and processing means (61, 67) complete a first measurement during the first period and convert the measured value into a binary number N1, complete a second measurement during the second period and again convert the measured value into a binary number N2, determine the angular sector containing the cursor (3), an angular sector being delimited by two electric access points (A, B, C) to the resistive track (1), and finally, determine the angular position (X) of said cursor from the measured potentials (N1, N2).

2. Sensor according to claim 1, characterized in that the continuous resistive track (1) has a constant resistance per unit angle (R).

3. Sensor according to any one of claims 1 and 2, characterized in that said access points (A, B, C) to said continuous track (1) are equidistant.

4. Sensor according to any one of claims 1 to 3, characterized in that a stub resistor (6A to 6C, R1) is inserted between each of said access points (A, B, C) to said resistive track (1) and said electric potential application means (CA, CB, CC, 66).

5. Sensor according to claim 1, characterized in that the measuring and processing means comprise:

   - an analog/digital convertor (61) whose analog input is connected to said cursor,
   - means (67) for analyzing at least two values supplied by said convertor (61) and delivering data proportional to the angular position (X) of the cursor (3).

6. Sensor according to claim 4, characterized in that said stub resistors (6A to 6C; R1) have a value substantially equal to 8R/3 where R is the resistance value per unit angle of said resistive track (1).

7. Method for implementing the measurement of the angular position of the cursor of a sensor according to claim 5, characterized in that it comprises the following steps:

   - energization (81) in a first configuration in which said potential application means apply the potential VM to an access point A, the potential VP to an access point C, an access point B not being energized,
   - a first measurement (82) of the potential present at the access point (4; 24) to said cursor (3), the value of said first measurement being converted into a binary number N1 by said analog/digital convertor (61),
   - energization (83) in a second configuration in which said potential application means apply the potential VM to the access point A, the potential VP to the access point B, the access point C not being energized,
   - a second measurement (84) of the potential at the access point (4; 24) to said cursor (3), the value of this second measurement being converted into a binary number N2 by the analog/digital convertor (61),
   - determination (85, 86, 87) of the angular sector containing the cursor (3), an angular sector being delimited by two electric access points (A, B, C) to the resistive track (1),
   - determination (88, 89) of data proportional to said angular position (X) of said cursor (3).

8. Method according to claim 7, characterized in that:

   - said step of determining said angular sector comprises a series of successive tests (85, 86, 87) of the validity of three predetermined equations in terms of N1 and N2,
   - said step of determining said data (810) proportional to said angular position consists in a calculation on the basis of predetermined equations immediately any of said three predetermined equations in terms of N1 and N2 is satisfied.

9. Method according to claim 8, characterized in that it also comprises a step (811) of detecting malfunctioning of the sensor if none of said three equations (85, 86, 87) is satisfied.

10. Method according to any one of claims 8 and 9 of the type applied to a sensor according to claim 6 cooperating with an analog/digital convertor working on n=8 bytes, characterized in that:

- the first test (85) for determining the angular sector consists in verifying the equation:
$$N1 = 2N2 + 4,$$
- the second test (86) consists in verifying the equation:
$$N1 + N2 = 360,$$
- if either of said tests (85, 86) is verified, the exact value of the angular position in degrees is given (88) by the equation:
$$X = N2 - 8,$$
- the third test (87) for determining the angular sector consists in verifying the equation:
$$N1 = N2/2 + 4,$$
- if said third test is verified, the exact value of the angular position in degrees is given by the equation:
$$X = 368 - N1.$$

A

6A

7

x

1

120°

4

5

3

6B

B

120°

C

2

6C

Fig. 1

I

P

D

Fig. 9

Fig. 2

Fig. 3a

Fig. 3b

Fig. 4

Fig. 5

Fig. 6

## Fig. 7a

C

$\frac{8R}{3}$

VPH

24

240R    120R

V

VPB

$\frac{8R}{3}$

A

## Fig. 7b

C

$\frac{8R}{3}$

VPH

240R    120R

24

VPB

V

$\frac{8R}{3}$

A

CA, CC  fermés
CB  ouvert — 81

↓

Prélever  N1 — 82

↓

CC  ouvert
CA, CC  fermés — 83

↓

Prélever  N2 — 84

↓

85 — $N1 = 2N2 + 4$ —— OUI ————→

NON

↓

86 — $N1 + N2 = 360$ —— OUI ————→

NON

↓

87 — $N1 = \dfrac{N2}{2} + 4$ —— OUI ——→

NON

$X = N2 - 8$ — 88

$X = 368 - N1$ — 89

810

811

## Fig. 8

Fig. 10